Europäisches Patentamt

European Patent Office

Office européen des brevets

(11) Veröffentlichungsnummer: **0 260 772**
**A2**

(12) # EUROPÄISCHE PATENTANMELDUNG

(21) Anmeldenummer: **87201798.3**

(51) Int. Cl.⁴: **C09K 5/06**

(22) Anmeldetag: **15.09.87**

(30) Priorität: **17.09.86 DE 3631601**

(43) Veröffentlichungstag der Anmeldung:
**23.03.88 Patentblatt 88/12**

(84) Benannte Vertragsstaaten:
**AT DE FR GB IT**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB IT AT**

(72) Erfinder: **Schröder, Johann, Dr.
Adenauerallee 125a
D-5100 Aachen(DE)**
Erfinder: **Gawron, Klaus
Florastrasse 2
D-5100 Aachen(DE)**
Erfinder: **Huszar, Reinhard, Dr.
Kirschentheuer 71
A-9162 Strau-Kärnten(AT)**
Erfinder: **Leitner, Johann
Richard-Wagner-Strasse 7/1
A-9020 Klagenfurt(AT)**
Erfinder: **Ramusch, Wolfgang
Salchendorf 14
A-9371 Brückl(AT)**

(74) Vertreter: **Piegler, Harald, Dipl.-Chem. et al
Philips Patentverwaltung GmbH
Wendenstrasse 35 Postfach 10 51 49
D-2000 Hamburg 1(DE)**

(54) **Kältespeicher für die Speiseeisherstellung.**

(57) Dem Eutektikum Kaliumchlorid-Wasser werden 2 bis 5 Vol.% Äthylalkohol zugemischt. Die Speichertemperaturen werden dadurch von -10,7°C auf den Bereich -11,5 bis -12,7°C abgesenkt. Dieser Temperaturbereich ist bei der Verwendung als Latentwärmespeichermittel in einem Kältespeicher für die Speiseeisherstellung besonders günstig.

FIG.1

## Kältespeicher für die Speiseeisherstellung

Die Erfindung betrifft einen Kältespeicher für die Speiseeisherstellung mit einem Behälter, der ein Latentwärmespeichermittel mit Phasenübergang fest-flüssig und umgekehrt auf der Basis des Eutektikums Kaliumchlorid-Wasser mit 19,54 Gew.% Kaliumchlorid enthält.

Ein derartiger Kältespeicher ist aus US-A-3 921 961 bekannt. Ein Nachteil dieses Kältespeichers ist es, daß dessen Speichertemperatur von -10,7°C für die Herstellung bestimmter Eissorten etwas zu hoch ist. So können zwar alle Eiskremsorten in bester Qualität hergestellt werden, für einige Sorbetsorten reicht aber die Temperatur nicht aus, um Eis von genügend fester Konsistenz zu erhalten.

Aus SU-A-548 620 ist es bekannt, daß die Schmelztemperaturen von Alkali-und Erdalkalimetallchloridlösungen durch einen Zusatz von Äthylalkohol herabgesetzt werden. Als Beispiel wird ein Natriumchlorid-Wasser-Gemisch mit 23,1 Gew.% Natriumchlorid genannt, dessen Schmelztemperatur durch Zusatz von 5, 10 bzw. 15 Gew.% Äthylalkohol von -21,2°C auf -29, -36 bzw. -43°C herabgesetzt wird. Diese Schmelztemperaturen liegen für die Speiseeisherstellung viel zu niedrig.

Aus der JP-A-59-131 687 ist es bekannt, wäßrigem, 16 bis 18%igem Kaliumhydrogencarbonat 2 bis 10% Äthylalkohol zuzusetzen. Dadurch wird ein Kältespeichermittel erhalten, das bei der Herstellung von Eiskrem und Sorbets anwendbar ist, für den menschlichen Körper harmlos ist und keine Korrosion des Behälters bewirkt. Die Schmelztemperatur des Kaliumhydrogencarbonat-Wasser-Eutektikums liegt jedoch mit -5,4°C für die Speiseeisherstellung zu hoch, so daß verhältnismäßig große Äthylalkoholmengen zugesetzt werden müssen, um die Schmelztemperatur in einen brauchbaren Bereich zu bringen. Diese großen Mengen an Äthylalkohol führen bereits nach wenigen Speicherzyklen zu Phasenstreuung und Entmischung.

Aufgabe der Erfindung ist es, die Speichertemperatur zwischen -11,5 und -12,7°C einzustellen und dabei zu vermeiden, daß bei wiederholten Speicherzyklen eine Phasenstreuung mit entsprechender Veränderung der Schmelztemperaturen und Schmelzwärmen auftritt.

Diese Aufgabe wird erfindungsgemäß dadurch gelöst, daß das Latentwärmespeichermittel einen Zusatz von 2 bis 5 Vol.% Äthylalkohol enthält.

Ein besonders günstiger Mischungsbereich leigt zwischen 98 und 95 Vol.% des Eutektikums Kaliumchlorid-Wasser, mit Äthylalkohol zu 100 Vol.% ergänzt. Die Schmelztemperaturen dieser Speichermittel liegen zwischen -13 und -11,5°C.

Um eine Unterkühlung des Speichermittels zu unterdrücken, ist es zweckmäßig, dem Speichermittel feste Keimbildner, z.B. poröses Aluminiumoxid oder Magnesiumoxid, in Mengen von 0,05 bis 1 Gew.% zuzusetzen.

Wie zahlreiche experimentelle Untersuchungen zeigen, tritt in dem erfindungsgemäßen Kältespeicher unter den in der Praxis der Eisherstellung gegebenen Bedingungen auch nach vielen Speicherzyklen keine störende Entmischung und keine Reduzierung der Schmelzwärme auf.

Ein Ausführungsbeispiel der Erfindung ist in einer Zeichnung dargestellt und wird im folgenden näher beschrieben. In der Zeichnung zeigen

Fig. 1 einen Kältespeicher im Schnitt in Seitenansicht und

Fig. 2 die Änderung der Schmelztemperatur einer KCl-Lösung (19,5 Gew.% KCl) durch Zusatz von Äthylalkohol.

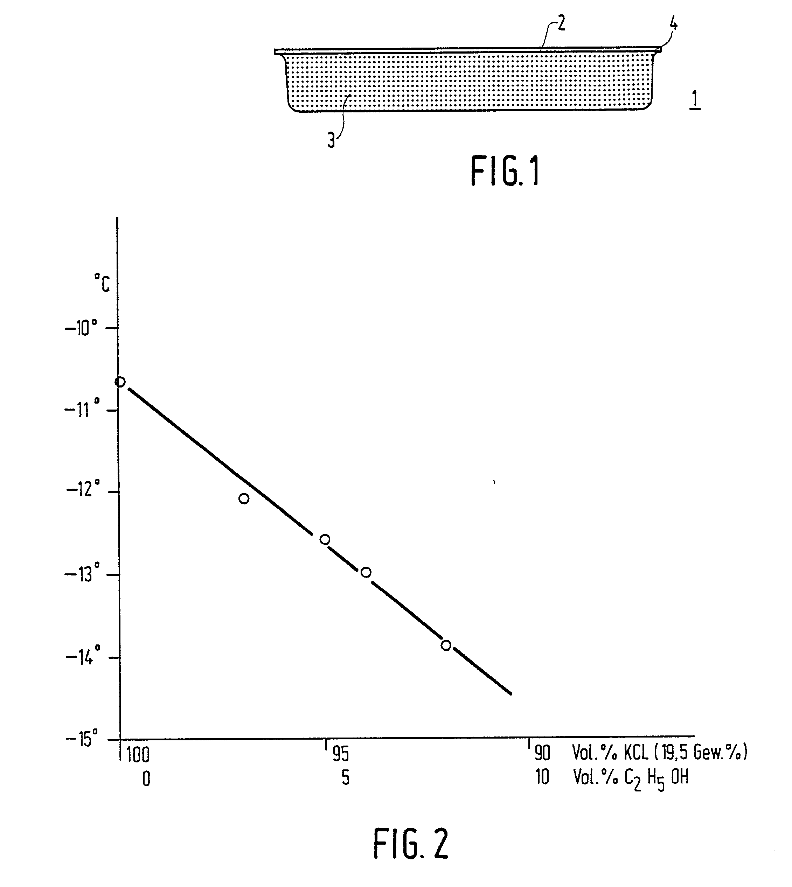

Der in eine Speiseeismaschine einlegbare Kältespeicher (Fig. 1) besteht aus einem flachen, zylindrischen Behälter 1, der mit einem Gemisch 3 aus Kaliumchlorid, Wasser, Aluminiumoxid und Äthylalkohol gefüllt und mit einem Deckel 2 mit einer vorspringenden durchgehenden Umrandung 4 verschlossen ist. Die Speichertemperatur dieses Kältespeichers beträgt -12,0°C. Das Gemisch 3 setzt sich wie folgt zusammen:

$$
\begin{array}{llll}
19,54 \text{ g} & KCl & \dots\dots\dots & 18,88 \text{ Gew.\%} \\
80,46 \text{ g} & H_2O & \dots\dots\dots & 77,74 \quad " \quad \% \\
3,00 \text{ g} & C_2H_5OH & \dots\dots & 2,90 \quad " \quad \% \\
0,50 \text{ g} & Al_2O_3 & \dots\dots & 0,48 \quad " \quad \% \\
\hline
103,50 \text{ g} & & & 100,00 \text{ Gew.\%}
\end{array}
$$

2

**Ansprüche**

1. Kältespeicher für die Speiseeisherstellung mit einem Behälter, der ein Latentwärmespeichermittel mit Phasenübergang fest-flüssig und umgekehrt auf der Basis des Eutektikums Kaliumchlorid-Wasser mit 19,54 Gew.% Kaliumchlorid enthält,
dadurch gekennzeichnet, daß das Latentwärmespeichermittel (3) 2 bis 5 Vol.% Äthylalkohol enthält.

2. Kältespeicher nach Aunspruch 1,
dadurch gekennzeichnet, daß das Latentwärmespeichermittel (3) zwischen 98 und 95 Vol.% des Eutektikums Kaliumchlorid-Wasser, mit dem Eutektikum Ammoniumchlorid-Wasser zu 100 Vol.% ergänzt, enthält.

3. Kältespeicher nach Anspruch 1,
dadurch gekennzeichnet, daß das Latentwärmespeichermittel (3) feste Keimbildner in Mengen von 0,05 bis 1 Gew.% enthält.

FIG.1

FIG. 2